# EUROPEAN PATENT SPECIFICATION

(11) **EP 2 899 301 B1**
(45) Date of publication and mention of the grant of the patent: **04.04.2018**
(21) Application number: 15152134.1
(22) Date of filing: 22.01.2015
(51) Int. Cl.: D01F 6/04, D01F 1/10, C08J 3/22, C08K 3/34, E01C 13/08

(54) **Method for producing an artificial fiber, artificial fiber produced and use thereof**
Verfahren zur Herstellung einer künstlichen Faser, künstliche Faser und Verwendung davon
Procédé de production de fibre artificielle, fibre artificielle produite et utilisation associée

(30) Priority: 28.01.2014 ES 201430097
(43) Date of publication of application: 29.07.2015
(73) Proprietor: Mondo Tufting, S.A., 50540 Borja (Zaragoza) (ES); Instituto Tecnológico De Aragón, 50015 Zaragoza (ES); Universidad De Zaragoza, 50009 Zaragoza (ES)
(72) Inventor: Testa, Manuel, 50540 BORJA (Zaragoza) (ES); Castrillon Garcia, Mariana, 50015 ZARAGOZA (ES); Alcalá Serrano, Noelia, 50015 ZARAGOZA (ES); Crespo Miñana, Ana Cristina, 50015 ZARAGOZA (ES); Santamaría Ramiro, Jesús, 50009 ZARAGOZA (ES); Irusta Alderete, Silvia, 50009 ZARAGOZA (ES)
(74) Representative: Ungria López, Javier

(56) References cited:
- GB-A- 1 492 040
- US-A1- 2008 090 955
- US-A1- 2013 216 736
- DATABASE WPI Week 201403 Thomson Scientific, London, GB; AN 2013-P18446 XP002738430, -& CN 103 014 898 A (JIANGSU CO-CREATION GRASS CO LTD) 3 April 2013 (2013-04-03)
- DATABASE WPI Week 200271 Thomson Scientific, London, GB; AN 2002-658640 XP002738431, -& CN 1 350 072 A (SHANGHAI YIFURUI IND CO LTD) 22 May 2002 (2002-05-22)
- DATABASE WPI Week 201366 Thomson Scientific, London, GB; AN 2013-Q69622 XP002738432, -& CN 103 103 630 A (LELING TAISHAN ARTIFICIAL LAWN IND CO) 15 May 2013 (2013-05-15)

## Description

### SUBJECT MATTER OF THE INVENTION

The following invention, as expressed in the title of the present specification, relates to a method for producing an artificial fiber, the produced artificial fiber and use thereof, wherein the principal subject matter is to develop an artificial fiber that is essentially for artificial turf with water-retention capacity in order to maintain its temperature of use regardless of external conditions, while at the same time maintaining its biomechanical and durability properties.

In summary, it involves producing an artificial fiber, mainly for use as artificial turf in sports facilities, with hydrophilic properties enabling it to retain water and thereby maintain its temperature of use, with the advantage of reducing the amount of water necessary for use thereof under ideal conditions.

### APPLICATION FIELD

The present specification describes a method for producing an artificial fiber, as well as the obtained artificial fiber, being especially applicable as artificial turf for sports facilities such as soccer, golf, rugby, padel tennis and hockey fields.

Likewise, the obtained artificial fiber may also be applied as artificial turf for domestic, decorative or landscaping use in gardens, pools, terraces or paths.

### BACKGROUND OF THE INVENTION

It is a known fact that more and more sports organizations and clubs are choosing to outfit their different types of sports fields with artificial turf as an alternative to natural grass turf, since it requires less maintenance and has a similar feel to natural grass, even offering improvements, for example that an artificial turf field may be used year round, whereas natural grass fields require a recovery period during which they cannot be used. These carpets of artificial turf are manufactured by weaving together artificial fibers.

Thus, these artificial fibers that are manufactured to be used as artificial turf are produced from a polymer base, such as polyethylene, with color masterbatch and a UV stabilizer to protect them from UV rays.

In addition, in order to produce carpets of artificial turf with fibers that maintain their features over time, the monofilament fibers must have a high resilience that makes them return to their upright position after being compressed momentarily or temporarily, preventing the fibers from being bent over toward the ground.

This ground consists of a polymer-textile base to which thermoplastic fibers are joined, the thermoplastic fibers looking like the fibers of natural turf. A portion of the ground surface further comprises a granular filler whose function is to simulate the texture of natural ground, and the latter's reaction to footsteps in operational conditions. It may also include an elastic sub-base that provides the necessary biomechanical properties.

One of the problems with using artificial turf in sports facilities is the need to keep it permanently moist, in order to maintain its ideal temperature of use and conditions.

### DESCRIPTION OF THE INVENTION

The subject matter of the invention is meant to solve the foregoing problems by means of the development of the new fiber in accordance with a polyolefin-based polymer material, which can be processed using current tufting methods and can maintain a constant temperature during use, such that in a preferred embodiment the polyolefin base is polyethylene, although it may be some other polyolefin.

To this end, the present specification describes a method for producing an artificial fiber with hydrophilic water-retention features that is capable of maintaining its temperature of use.

Thus, starting with a method based on a polymer-based mixture, such as polyethylene with color masterbatch and UV stabilizers, it involves producing a fiber with hydrophilic properties, wherein the method comprises:
✔ Mixing, in an extruder:
   ∘ polyolefin pellet, for example polyethylene, in a percentage of between 55 and 92 % by weight with:
      ▪ zeolite in a percentage of between 5 and 30 % by weight, or
      ▪ cellulose in a percentage of between 3 and 20 %,
   ∘ color masterbatch and UV stabilizers in a percentage of between 5 to 15 %;
✔ heating the mixture at a temperature of 180 to 250 °C for 5 minutes;
✔ extruding the melted mixture;
✔ cooling the fiber as it exits the extruder die;
✔ drying the fiber;
✔ stretching the fiber by a ratio of between 3 and 6 and at a temperature of between 90 and 120 °C; and
✔ winding and braiding the fiber by twisting it between 24 and 40 times. In a preferred embodiment of the invention, the method comprises:
✔ mixing, in an extruder:
   ∘ polyolefin pellet in a percentage of between 60 and 89 % by weight with:
      ∘ zeolite in a percentage of 5 to 30 % by weight, and
      ∘ color masterbatch and UV stabilizers in a percentage of 6 to 10 %;
✔ heating the mixture at a temperature of between 180 to 250 °C for 5 minutes;
✔ extruding the melted mixture;
✔ cooling the fiber as it exits the extruder die;
✔ drying the fiber;
✔ stretching the fiber by a ratio of between 3 and 6 at a temperature of between 90 and 120 °C; and
✔ winding and braiding the fiber by twisting it between 24 and 40 times.
In a more preferred embodiment of the invention, the method comprises:
✔ mixing, in an extruder:
   ∘ polyolefin pellet in a percentage of between 70 and 83 % by weight;
   ∘ zeolite in a percentage of between 10 and 20 % by weight; and,
   ∘ color masterbatch and UV stabilizers in a percentage of between 7 and 10 %;
✔ heating the mixture at a temperature of 180 to 250 °C for 5 minutes;
✔ extruding the melted mixture;
✔ cooling the fiber as it exits the extruder die;
✔ drying the fiber;
✔ stretching the fiber by a ratio of between 3 and 6 at a temperature of between 90 and 120 °C; and
✔ winding and braiding the fiber by twisting it between 24 and 40 times.
In a practical variant embodiment of the invention, the method comprises:
✔ mixing, in an extruder:
   ∘ polyolefin pellet in a percentage of between 70 and 90 % by weight;
   ∘ cellulose in a percentage of between 3 to 20 % by weight; and,
   ∘ color masterbatch and UV stabilizers in a percentage of between 7 to 10 % by weight;
✔ heating the mixture at a temperature of 180 to 250 °C for 5 minutes;
✔ extruding the melted mixture;
✔ cooling the fiber as it exits the extruder die;
✔ drying the fiber;
✔ stretching the fiber by a ratio of between 3 and 6 at a temperature of between 90 and 120 °C; and
✔ winding and braiding the fiber by twisting it between 24 and 40 times.
More preferably the method comprises:
✔ mixing, in an extruder:
   ∘ polyolefin pellet in a percentage of between 83 to 85 % by weight;
   ∘ cellulose in a percentage of between 8 to 10 % by weight; and,
   ∘ color masterbatch and UV stabilizers in a percentage of 7 % by weight;
✔ heating the mixture at a temperature of 180 to 250 °C for 5 minutes;
✔ extruding the melted mixture;
✔ cooling the fiber as it exits the extruder die;
✔ drying the fiber;
✔ stretching the fiber by a ratio of between 3 and 6 at a temperature of between 90 and 120 °C; and
✔ winding and braiding the fiber by twisting it between 24 and 40 times.
Mixing may be carried out at a speed of between 30 to 150 rpm.

According to a practical embodiment of the invention, the zeolite or the cellulose are integrated in the polyolefin pellet, i.e. the zeolite and the cellulose may be added in independently or may form part of the polyolefin pellet itself, as the issue is to incorporate an element that enables water adsorption and retention. In addition, the zeolite may or may not be powdered.

The fiber is cooled upon exiting the extruder die either through immersion in a water bath or with the air.

Thus, the composition of the fiber produced in accordance with the described production method is:
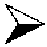 63 to 88 % polyolefin;
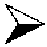 5 to 30 % zeolite; and
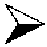 7 % masterbatch and UV stabilizers.

More preferably, the composition of the fiber produced in accordance with the described production method is:
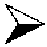 70 to 80 % polyolefin;
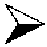 13 to 20 % zeolite; and
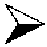 7 to 10 % masterbatch and UV stabilizers.

Also, in a practical variant embodiment of the invention, the composition of the fiber is:
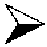 73 to 90 % polyolefin;
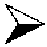 4 to 20 % cellulose; and
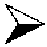 7 % masterbatch and UV stabilizers.

More preferably, the composition of the fiber produced in accordance with the described production method is:
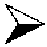 83 to 87 % polyolefin;
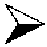 6 to 10 % cellulose; and
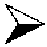 7 % masterbatch and UV stabilizers.

The fiber thus produced has hydrophilic water-retention features that enable the temperature of use to be maintained, thereby constituting a significant advantage since less water must be employed to maintain it in ideal usage conditions.

Thus, the fiber produced according to the described method and composition may be used as an artificial turf in sports facilities, as well as for domestic, decorative or landscaping use.

### BRIEF DESCRIPTION OF THE DRAWINGS

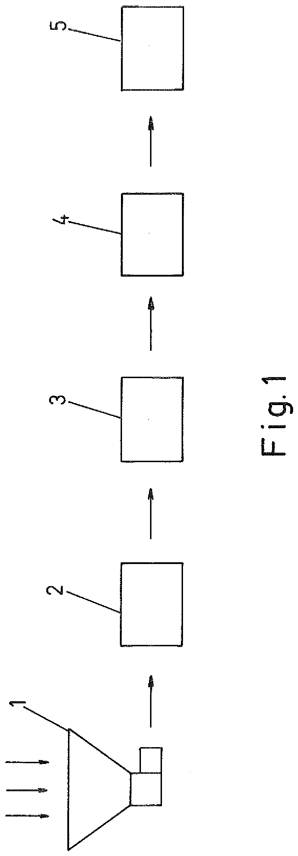

Figure 1.- Shows a flow diagram with the successive phases that conform the method for producing an artificial fiber with hydrophilic features that is especially applicable as an artificial turf for various uses.

### DESCRIPTION OF A PREFERRED EMBODIMENT

In light of the aforementioned figures, and in accordance with the numbering employed, it may be observed how, in order to carry out the method for obtaining an artificial fiber in accordance with the invention, in a first phase the components of the mixture are put inside an extruder 1. Thus what is put inside is the polyolefin pellet, for example polyethylene, along with the zeolite, the color masterbatch and the UV stabilizers, in accordance with their respective percentages, wherein the same is mixed and heated. For this purpose, the mixture is carried out at a speed of between 30 to 150 rpm, with heating at a temperature of between 180 to 250 °C, for approximately 5 minutes.

The zeolite and the cellulose may be incorporated in the polyolefin pellet itself in accordance with the desired percentage, or may be independent from the pellet and be added in when making the mixture. Additionally, the zeolite may or may not be powdered.

Subsequently the melted mixture is extruded through a die with various types of profiles, such that the profile may be flat, oval-shaped, or have any other particular geometry one desires.

In a second phase, upon exiting the mixture through the extruder die 1, the fiber is then cooled 2, which may be carried out, for example, with cold air or through immersion in a water bath.

Once the fiber has cooled down, in a third phase it is driven through dryers in order to dry it 3. Once dry, in a fourth phase it is stretched 4 at a temperature of 90 to 120 °C and by a stretching ratio of 3 to 6.

Lastly, in a fifth phase, the fiber is wound and brained 5 by twisting it between 24 and 40 times, such that the artificial fiber produced is ready to be sewn to its corresponding base in order to form "carpets" of artificial turf.

In this way, the "carpets" of artificial turf are based on a hydrophilic artificial fiber, i.e. an artificial fiber that retains water, thereby maintaining its temperature of use regardless of environmental conditions.

### EXAMPLE.-

97.5 kilograms of polyethylene, 37.5 kilograms of powdered zeolite and 15 kilograms of masterbatch and UV stabilizers were placed inside a single-screw extruder with a 150 kg/h production capacity, and then mixing at 32 rpm at a temperature of 215 °C for 5 minutes.

Thereafter the melted mixture was extruded and upon exiting the extruder die, the fiber was cooled through immersion in a water bath at 40 °C.

Once the fiber cooled down, it was driven through dryers and, once dry, was stretched at a temperature of 100 °C with a stretching ratio of 5, whereupon, lastly, the fiber was wound with a braiding of 30.

Thus, an artificial fiber was produced whose composition was:
✔ 65 % polyethylene;
✔ 25 % zeolite; and
✔ 10 % color masterbatch and UV stabilizers.

Lastly, it was possible to confirm that the artificial fiber produced according to the method and composition of the example, in terms of its biomechanical and durability properties, had the same features as a conventional artificial fiber, while it was also possible to confirm that the generated fiber is capable of retaining water in order to maintain its proper temperature of use.

## Claims

1. **A method for producing an artificial fiber,** of the type of fibers produced from a polymer base, color masterbatch and UV stabilizers, **characterized in that** the method comprises:
✔ Mixing, in an extruder (1):
∘ polyolefin pellet in a percentage of between 55 and 92 % by weight with:
▪ zeolite in a percentage of between 5 and 30 % by weight, or
▪ cellulose in a percentage of between 3 and 20 % by weight
∘ color masterbatch and UV stabilizers in a percentage of 5 to 15 % by weight;
✔ heating the mixture at a temperature of 180 to 250 °C for 5 minutes;
✔ extruding the melted mixture;
✔ cooling (2) the fiber as it exits the extruder die;
✔ drying (3) the fiber;
✔ stretching (4) the fiber by a ratio of between 3 and 6 at a temperature of between 90 and 120 °C; and
✔ winding and braiding (5) the fiber by twisting it between 24 and 40 times.

2. **The method for producing an artificial fiber,** according to claim 1, **characterized in that** the method comprises:
✔ mixing, in an extruder (1):
∘ polyolefin pellet in a percentage of between 60 and 89 % by weight;
∘ zeolite in a percentage of 5 to 30 % by weight; and
∘ color masterbatch and UV stabilizers in a percentage of 6 to 10 % by weight;
✔ heating the mixture at a temperature of 180 to 250 °C for 5 minutes;
✔ extruding the melted mixture;
✔ cooling (2) the fiber as it exits the extruder die;
✔ drying (3) the fiber;
✔ stretching (4) the fiber by a ratio of between 3 and 6 at a temperature of between 90 and 120 °C; and
✔ winding and braiding (5) the fiber by twisting it between 24 and 40 times.

3. **The method for producing an artificial fiber,** according to claim 1, **characterized in that** the method comprises:
✔ mixing, in an extruder (1):
∘ polyolefin pellet in a percentage of 70 to 83 % by weight;
∘ zeolite in a percentage of 10 to 20 % by weight; and
∘ color masterbatch and UV stabilizers in a percentage of 7 to 10 % by weight;
✔ heating the mixture at a temperature of 180 to 250 °C for 5 minutes;
✔ extruding the melted mixture;
✔ cooling (2) the fiber as it exits the extruder die;
✔ drying (3) the fiber;
✔ stretching (4) the fiber by a ratio of between 3 and 6 at a temperature of between 90 and 120 °C; and
✔ winding and braiding (5) the fiber by twisting it between 24 and 40 times.

4. **The method for producing an artificial fiber,** according to claim 1, **characterized in that** the method comprises:
✔ mixing, in an extruder (1),:
∘ polyolefin pellet in a percentage of between 70 and 90 % by weight;
∘ cellulose in a percentage of 3 to 20 % by weight; and
∘ color masterbatch and UV stabilizers in a percentage of 7 to 10 % by weight;
✔ heating the mixture at a temperature of 180 to 250 °C for 5 minutes;
✔ extruding the melted mixture;
✔ cooling (2) the fiber as it exits the extruder die;
✔ drying (3) the fiber;
✔ stretching (4) the fiber by a ratio of between 3 and 6 at a temperature of between 90 and 120 °C; and
✔ winding and braiding (5) the fiber by twisting it between 24 and 40 times.

5. **The method for producing an artificial fiber,** according to claim 1, **characterized in that** the method comprises:
✔ mixing, in an extruder (1):
∘ polyolefin pellet in a percentage of 83 to 85 % by weight;
∘ cellulose in a percentage of 8 to 10 % by weight; and
∘ color masterbatch and UV stabilizers in a percentage of 7 % by weight;
✔ heating the mixture at a temperature of 180 to 250 °C for 5 minutes;
✔ extruding the melted mixture;
✔ cooling (2) the fiber as it exits the extruder die;
✔ drying (3) the fiber;
✔ stretching (4) the fiber by a ratio of between 3 and 6 at a temperature of between 90 and 120 °C; and
✔ winding and braiding (5) the fiber by twisting it between 24 and 40 times.

6. **The method for producing an artificial fiber,** according to claim 1, **characterized in that** the zeolite or the cellulose are integrated in the polyolefin pellet.

7. **The method for producing an artificial fiber,** according to claim 1, **characterized in that** the mixing in the extruder (1) takes place at a speed of between 30 to 150 rpm.

8. **The method for producing an artificial fiber,** according to claim 1, **characterized in that** the cooling (2) of the fiber upon exiting through the extruder die takes place either through immersion in a water bath or with the air.

9. **An artificial fiber produced** according to the claims 1 to 8, **characterized in that** the composition of the fiber is:
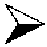 63 to 88 % polyolefin;
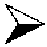 5 to 30 % zeolite; and
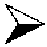 7 % masterbatch and UV stabilizers,
the fiber having hydrophilic water-retention features and maintaining its temperature of use.

10. **The artificial fiber produced** according to claim 9, **characterized in that** the composition of the fiber is:
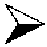 70 to 80 % polyolefin;
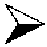 13 to 20 % zeolite; and
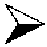 7 to 10 % masterbatch and UV stabilizers,
the fiber having hydrophilic water-retention features and maintaining its temperature of use.

11. **The artificial fiber produced** according to the claims 1 to 8, **characterized in that** the composition of the fiber is:
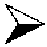 73 to 89 % polyolefin;
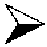 4 to 20 % cellulose; and
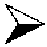 7 % masterbatch and UV stabilizers,
the fiber having hydrophilic water-retention features and maintaining its temperature of use.

12. **The artificial fiber produced** according to claim 11, **characterized in that** the composition of the fiber is:
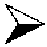 83 to 87 % polyolefin;
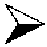 6 to 10 % cellulose; and
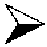 7 % masterbatch and UV stabilizers,
the fiber having hydrophilic water-retention features and maintaining its temperature of use.

13. **A use** of the fiber produced according to the described method and composition as an artificial turf in sports facilities.

14. **A use** of the fiber produced according to the described method and composition as a domestic or decorative artificial turf.

## Patentansprüche

1. Verfahren zum Herstellen einer Kunstfaser, von der Art von Fasern, die aus einer Polymergrundlage, einem Farbmasterbatch und UV-Stabilisatoren hergestellt werden, **dadurch gekennzeichnet, dass** das Verfahren umfasst:
✔ Mischen in einem Extruder (1):
∘ Polyolefinpellet in einem Prozentsatz zwischen 55 und 92 Gew.-% mit:
▪ Zeolith in einem Prozentsatz zwischen 5 und 30 Gew.-%, oder
▪ Cellulose in einem Prozentsatz zwischen 3 und 20 Gew.-%
∘ Farbmasterbatch und UV-Stabilisatoren in einem Prozentsatz von 5 bis 15 Gew.-%;
✔ Erwärmen der Mischung auf eine Temperatur von 180 bis 250 °C für 5 Minuten;
✔ Extrudieren der geschmolzenen Mischung;
✔ Kühlen (2) der Faser, wenn sie aus der Extruderdüse austritt;
✔ Trocknen (3) der Faser;
✔ Strecken (4) der Faser in einem Verhältnis zwischen 3 und 6 bei einer Temperatur zwischen 90 und 120 °C; und
✔ Wickeln und Flechten (5) der Faser durch Verdrehen derselben zwischen 24 und 40 Mal.

2. Verfahren zum Herstellen einer Kunstfaser, gemäß Anspruch 1, **dadurch gekennzeichnet, dass** das Verfahren umfasst:
✔ Mischen, in einem Extruder (1):
∘ Polyolefinpellet in einem Prozentsatz zwischen 60 und 89 Gew.-%;
∘ Zeolith in einem Prozentsatz von 5 bis 30 Gew..-%; und
∘ Farbmasterbatch und UV-Stabilisatoren in einem Prozentsatz von 6 bis 10 Gew.-%;
✔ Erwärmen der Mischung auf eine Temperatur von 180 bis 250 °C für 5 Minuten;
✔ Extrudieren der geschmolzenen Mischung;
✔ Kühlen (2) der Faser, wenn sie aus der Extruderdüse austritt;
✔ Trocknen (3) der Faser;
✔ Strecken (4) der Faser in einem Verhältnis zwischen 3 und 6 bei einer Temperatur zwischen 90 und 120 °C; und
✔ Wickeln und Flechten (5) der Faser durch Verdrehen derselben zwischen 24 und 40 Mal.

3. Verfahren zum Herstellen einer Kunstfaser, gemäß Anspruch 1, **dadurch gekennzeichnet, dass** das Verfahren umfasst:
✔ Mischen, in einem Extruder (1):
∘ Polyolefinpellet in einem Prozentsatz von 70 bis 83 Gew.-%;
∘ Zeolith in einem Prozentsatz von 10 bis 20 Gew.-%; und
∘ Farbmasterbatch und UV-Stabilisatoren in einem Prozentsatz von 7 bis 10 Gew.-%;
✔ Erwärmen der Mischung auf eine Temperatur von 180 bis 250 °C für 5 Minuten;
✔ Extrudieren der geschmolzenen Mischung;
✔ Kühlen (2) der Faser, wenn sie aus der Extruderdüse austritt;
✔ Trocknen (3) der Faser;
✔ Strecken (4) der Faser in einem Verhältnis zwischen 3 und 6 bei einer Temperatur zwischen 90 und 120 °C; und
✔ Wickeln und Flechten (5) der Faser durch Verdrehen derselben zwischen 24 und 40 Mal.

4. Verfahren zum Herstellen einer Kunstfaser, gemäß Anspruch 1, **dadurch gekennzeichnet, dass** das Verfahren umfasst:
✔ Mischen, in einem Extruder (1):
∘ Polyolefinpellet in einem Prozentsatz zwischen 70 und 90 Gew.-%;
∘ Cellulose in einem Prozentsatz von 3 bis 20 Gew.-%; und
∘ Farbmasterbatch und UV-Stabilisatoren in einem Prozentsatz von 7 bis 10 Gew.-%;
✔ Erwärmen der Mischung auf eine Temperatur von 180 bis 250 °C für 5 Minuten;
✔ Extrudieren der geschmolzenen Mischung;
✔ Kühlen (2) der Faser, wenn sie aus der Extruderdüse austritt;
✔ Trocknen (3) der Faser;
✔ Strecken (4) der Faser in einem Verhältnis zwischen 3 und 6 bei einer Temperatur zwischen 90 und 120 °C; und
✔ Wickeln und Flechten (5) der Faser durch Verdrehen derselben zwischen 24 und 40 Mal.

5. Verfahren zum Herstellen einer Kunstfaser, gemäß Anspruch 1, **dadurch gekennzeichnet, dass** das Verfahren umfasst:
✔ Mischen, in einem Extruder (1):
∘ Polyolefinpellet in einem Prozentsatz von 83 bis 85 Gew.-%;
∘ Cellulose in einem Prozentsatz von 8 bis 10 Gew.-%; und
∘ Farbmasterbatch und UV-Stabilisatoren in einem Prozentsatz von 7 Gew.-%;
✔ Erwärmen der Mischung auf eine Temperatur von 180 bis 250 °C für 5 Minuten;
✔ Extrudieren der geschmolzenen Mischung;
✔ Kühlen (2) der Faser, wenn sie aus der Extruderdüse austritt;
✔ Trocknen (3) der Faser;
✔ Strecken (4) der Faser in einem Verhältnis zwischen 3 und 6 bei einer Temperatur zwischen 90 und 120 °C; und
✔ Wickeln und Flechten (5) der Faser durch Verdrehen derselben zwischen 24 und 40 Mal.

6. Verfahren zum Herstellen einer Kunstfaser, gemäß Anspruch 1, **dadurch gekennzeichnet, dass** der Zeolith oder die Cellulose in das Polyolefinpellet integriert sind.

7. Verfahren zum Herstellen einer Kunstfaser, gemäß Anspruch 1, **dadurch gekennzeichnet, dass** das Mischen in dem Extruder (1) mit einer Geschwindigkeit von 30 bis 150 U/min stattfindet.

8. Verfahren zum Herstellen einer Kunstfaser, gemäß Anspruch 1, **dadurch gekennzeichnet, dass** das Kühlen (2) der Faser beim Austritt durch die Extruderdüse entweder durch Eintauchen in ein Wasserbad oder mit der Luft stattfindet.

9. Kunstfaser, hergestellt gemäß den Ansprüchen 1 bis 8, **dadurch gekennzeichnet, dass** die Zusammensetzung der Faser Folgendes ist:
> 63 bis 88 % Polyolefin;
> 5 bis 30 % Zeolith; und
> 7 % Masterbatch und UV-Stabilisatoren,
wobei die Faser hydrophile Wasserrückhaltemerkmale aufweist und ihre Gebrauchstemperatur beibehält.

10. Kunstfaser, hergestellt gemäß Anspruch 9, **dadurch gekennzeichnet, dass** die Zusammensetzung der Faser Folgendes ist:
> 70 bis 80 % Polyolefin;
> 13 bis 20 % Zeolith; und
> 7 bis 10 % Masterbatch und UV-Stabilisatoren,
wobei die Faser hydrophile Wasserrückhaltemerkmale aufweist und ihre Gebrauchstemperatur beibehält.

11. Kunstfaser, hergestellt gemäß den Ansprüchen 1 bis 8, **dadurch gekennzeichnet, dass** die Zusammensetzung der Faser Folgendes ist:
> 73 bis 89 % Polyolefin;
> 4 bis 20 % Cellulose; und
> 7 % Masterbatch und UV-Stabilisatoren,
wobei die Faser hydrophile Wasserrückhaltemerkmale aufweist und ihre Gebrauchstemperatur beibehält.

12. Kunstfaser, hergestellt gemäß Anspruch 11, **dadurch gekennzeichnet, dass** die Zusammensetzung der Faser Folgendes ist:
> 83 bis 87 % Polyolefin;
> 6 bis 10 % Cellulose; und
> 7 % Masterbatch und UV-Stabilisatoren,
wobei die Faser hydrophile Wasserrückhaltemerkmale aufweist und ihre Gebrauchstemperatur beibehält.

13. Verwendung der Faser, hergestellt gemäß dem beschriebenen Verfahren und mit der beschriebenen Zusammensetzung, als Kunstrasen in Sportanlagen.

14. Verwendung der Faser, hergestellt gemäß dem beschriebenen Verfahren und mit der beschriebenen Zusammensetzung, als häuslicher oder dekorativer Kunstrasen.

## Revendications

1. Procédé de production d'une fibre artificielle, du type de fibres produit à partir d'une base polymère, d'un lot mère de couleur et de stabilisants aux UV, **caractérisé en ce que** le procédé comprend :
✔ le mélange, dans une extrudeuse (1) :
∘ de boulette de polyoléfine dans un pourcentage de 55 à 92 % en masse avec :
▪ de la zéolite dans un pourcentage de 5 à 30 % en masse, ou
▪ de la cellulose dans un pourcentage de 3 à 20 % en masse
∘ de lot mère de couleur et de stabilisants aux UV dans un pourcentage de 5 à 15 % en masse ;
✔ le chauffage du mélange à une température de 180 à 250°C pendant 5 minutes ;
✔ l'extrusion du mélange fondu ;
✔ le refroidissement (2) de la fibre lorsqu'elle sort de la filière d'extrudeuse ;
✔ le séchage (3) de la fibre ;
✔ l'étirement (4) de la fibre à un rapport de 3 à 6 à une température de 90 à 120°C ; et
✔ l'enroulement et le tressage (5) de la fibre en la torsadant entre 24 à 40 fois.

2. Procédé de production d'une fibre artificielle, selon la revendication 1, **caractérisé en ce que** le procédé comprend :
✔ le mélange dans une extrudeuse (1) :
∘ de boulette de polyoléfine dans un pourcentage de 60 à 89 % en masse ;
∘ de zéolite dans un pourcentage de 5 à 30 % en masse ; et
∘ de lot mère de couleur et de stabilisants aux UV dans un pourcentage de 6 à 10 % en masse ;
✔ le chauffage du mélange à une température de 180 à 250°C pendant 5 minutes ;
✔ l'extrusion du mélange fondu ;
✔ le refroidissement (2) de la fibre lorsqu'elle sort de la filière d'extrudeuse ;
✔ le séchage (3) de la fibre ;
✔ l'étirement (4) de la fibre à un rapport de 3 à 6 à une température de 90 à 120°C ; et
✔ l'enroulement et le tressage (5) de la fibre en la torsadant entre 24 et 40 fois.

3. Procédé de production d'une fibre artificielle, selon la revendication 1, **caractérisé en ce que** le procédé comprend :
✔ le mélange, dans une extrudeuse (1) :
∘ de boulette de polyoléfine dans un pourcentage de 70 à 83 % en masse ;
∘ de zéolite dans un pourcentage de 10 à 20 % en masse ; et
∘ de lot mère de couleur et de stabilisants aux UV dans un pourcentage de 7 à 10 % en masse ;
✔ le chauffage du mélange à une température de 180 à 250°C pendant 5 minutes ;
✔ l'extrusion du mélange fondu ;
✔ le refroidissement (2) de la fibre lorsqu'elle sort de la filière d'extrudeuse ;
✔ le séchage (3) de la fibre ;
✔ l'étirement (4) de la fibre à un rapport de 3 à 6 à une température de 90 à 120°C ; et
✔ l'enroulement et le tressage (5) de la fibre en la torsadant entre 24 et 40 fois.

4. Procédé de production d'une fibre artificielle, selon la revendication 1, **caractérisé en ce que** le procédé comprend :
✔ le mélange, dans une extrudeuse (1) :
∘ de boulette de polyoléfine dans un pourcentage de 70 à 90 % en masse ;
∘ de cellulose dans un pourcentage de 3 à 20 % en masse ; et
∘ de lot mère de couleur et de stabilisants aux UV dans un pourcentage de 7 à 10 % en masse ;
✔ le chauffage du mélange à une température de 180 à 250°C pendant 5 minutes ;
✔ l'extrusion du mélange fondu ;
✔ le refroidissement (2) de la fibre lorsqu'elle sort de la filière d'extrudeuse ;
✔ le séchage (3) de la fibre ;
✔ l'étirement (4) de la fibre à un rapport de 3 à 6 à une température de 90 à 120°C ; et
✔ l'enroulement et le tressage (5) de la fibre en la torsadant entre 24 et 40 fois.

5. Procédé de production d'une fibre artificielle, selon la revendication 1, **caractérisé en ce que** le procédé comprend :
✔ le mélange, dans une extrudeuse (1) :
∘ de boulette de polyoléfine dans un pourcentage de 83 à 85 % en masse ;
∘ de cellulose dans un pourcentage de 8 à 10 % en masse ; et
∘ de lot mère de couleur et de stabilisants aux UV dans un pourcentage de 7 % en masse ;
✔ le chauffage du mélange à une température de 180 à 250°C pendant 5 minutes ;
✔ l'extrusion du mélange fondu ;
✔ le refroidissement (2) de la fibre lorsqu'elle sort de la filière d'extrudeuse ;
✔ le séchage (3) de la fibre ;
✔ l'étirement (4) de la fibre à un rapport de 3 à 6 à une température de 90 à 120°C ; et
✔ l'enroulement et le tressage (5) de la fibre en la torsadant entre 24 et 40 fois.

6. Procédé de production d'une fibre artificielle, selon la revendication 1, **caractérisé en ce que** la zéolite ou la cellulose sont intégrées dans la boulette de polyoléfine.

7. Procédé de production d'une fibre artificielle, selon la revendication 1, **caractérisé en ce que** le mélange dans l'extrudeuse (1) a lieu à une vitesse de 30 à 150 tr/min.

8. Procédé de production d'une fibre artificielle, selon la revendication 1, **caractérisé en ce que** le refroidissement (2) de la fibre lors de la sortie à travers la filière d'extrudeuse a lieu soit par immersion dans un bain d'eau, soit avec l'air.

9. Fibre artificielle produite selon les revendications 1 à 8, **caractérisée en ce que** la composition de la fibre est :
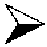 de 63 à 88 % de polyoléfine ;
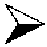 de 5 à 30 % de zéolite ; et
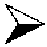 de 7 % de lot mère et de stabilisants aux UV,
la fibre ayant des caractéristiques hydrophiles de rétention d'eau et conservant sa température d'utilisation.

10. Fibre artificielle produite selon la revendication 9, **caractérisée en ce que** la composition de la fibre est :
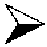 de 70 à 80 % de polyoléfine ;
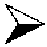 de 13 à 20 % de zéolite ; et
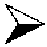 de 7 à 10 % de lot mère et de stabilisants aux UV,
la fibre ayant des caractéristiques hydrophiles de rétention d'eau et conservant sa température d'utilisation.

11. Fibre artificielle produite selon les revendications 1 à 8, **caractérisée en ce que** la composition de la fibre est :
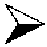 de 73 à 89 % de polyoléfine ;
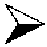 de 4 à 20 % de cellulose ; et
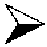 de 7 % de lot mère et de stabilisants aux UV,
la fibre ayant des caractéristiques hydrophiles de rétention d'eau et conservant sa température d'utilisation.

12. Fibre artificielle produite selon la revendication 11, **caractérisée en ce que** la composition de la fibre est :
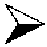 de 83 à 87 % de polyoléfine ;
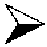 de 6 à 10 % de cellulose ; et
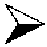 de 7 % de lot mère et de stabilisants aux UV,
la fibre ayant des caractéristiques hydrophiles de rétention d'eau et conservant sa température d'utilisation.

13. Utilisation de la fibre produite selon le procédé et la composition décrits comme une pelouse artificielle dans des installations sportives.

14. Utilisation de la fibre produite selon le procédé et la composition décrits comme une pelouse artificielle domestique ou décorative.
